# EUROPEAN PATENT APPLICATION

(11) **EP 1 980 355 A1**
(43) Date of publication of application: **15.10.2008**
(21) Application number: 07791050.3
(22) Date of filing: 20.07.2007
(51) Int. Cl.: B23K 35/26, C22C 13/00

(54) **LEAD-FREE SOLDER ALLOY**

(30) Priority: 27.07.2006 JP 2006204029
(71) Applicant: Topy Kogyo Kabushiki Kaisha, Tokyo 141-8634 (JP); Kabushiki Kaisha Nippon Filler Metals, Noda-city, Chiba 270-0203 (JP)
(72) Inventor: YAMADA, Seiji, Noda-city, Chiba 270-0203 (JP); SUGIMORI, Kenichiro, Tokyo 141-8634 (JP)
(74) Representative: Schirdewahn, Jürgen
(86) International application number: PCT/JP2007/064312
(87) International publication number: WO 2008/013104

(57) **Abstract**

Provided is an SnCu lead-free solder alloy which eliminates a drawback that an intermetallic compound excessively precipitates and the precipitate serves as nuclei to form dross to thereby cause soldering defects including a needle-like protrusion to occur, thus to satisfy all of the properties required for practical use.

A lead-free solder alloy contains 0.1 to 1.5% by weight of Cu, not less than 0.01 and less than 0.05% by weight of Co, 0.05 to 0.5% by weight of Ag and 0.01 to 0.1% by weight of Sb, the remainder being Sn, or further contains 0.001 to 0.008% by weight of Ge, whereby the formation of dross is prevented, and thus the drawback that soldering defects including a needle-like protrusion occur is eliminated.

## Description

### Technical Field

The present invention relates to a lead-free solder alloy for use in e.g., metal junction of electric and electronic devices and, more fully described, to an SnCu lead-free solder alloy for use in flow soldering, manual soldering or the like.

### Background Art

In conventional, as a solder alloy for use in e.g., metal junction of electric and electronic devices, a solder alloy containing lead e.g., 63% by weight of Sn and 37% by weight of Pb has generally been used.

A solder containing lead, in the case in which the lead having been liquated out from wastes such as soldered substrates penetrates into a ground water, has been pointed out to raise a serious disorder in nervous systems by drinking this ground water. Therefore, many lead-free solder alloys containing no lead have been studied.

As a lead-free solder alloy containing no lead, SnCu alloy, SnAgCu alloy, SnZn alloy or the one of these alloys added with Bi, In and the like has been studied.

The SnCu alloy of these alloys, being an eutectic alloy of Sn0.7Cu, has a higher melting point of 227 °C as compared with other lead-free solder alloys, but due to comparatively high wettability as well as low price, it is one of materials expected to be practically used.

In this eutectic alloy of Sn0.7Cu, however, in the case in which soldering is conducted in consideration of heat resistance of parts, the difference between a melting point and an operation temperature will inevitably be smaller, and therefore, soldering defects including needle-like protrusion resulted from solidification of a solder during soldering is likely to occur. In addition, this eutectic alloy of Sn0.7Cu has low creep strength as an Sn-based lead-free alloy, so that it has the drawback of not being used at the portion on which a large thermal stress load is applied. Moreover, this solder is likely to make erosion of copper or iron alloys, so that a problem exists in occurrence of the so-called erosion phenomenon that a copper circuit of substrates is damaged or a container of a solder reservoir is eroded, and this problem prevents practical implementation.

Although a high melting point of SnCu alloys cannot be avoided inasmuch as it is an SnCu-system, much studies have been made for improving wettability, creep strength, and erosion resistance of copper, and an alloy of Sn0.7Cu eutectic alloy added with Ag, Sb, Bi and Ni has been proposed.

By the addition of Ag, although wettability and mechanical characteristics such as creep strength are improved, erosion resistance of Cu is decreased.

By the addition of Sb, although mechanical characteristics such as creep strength are improved, there are little effects of improving wettability or erosion resistance of Cu.

By the addition of Bi, although wettability is considerably improved and creep strength is also improved, toughness is decreased owing to a lower elongation, and there are little improvements in erosion resistance of copper.

By the addition of Ni, although creep characteristics are improved and erosion resistance of Cu is improved, there is no improvement in wettability.

Furthermore, recently, to improve thermal fatigue characteristics of SnCu solder alloys, the invention of adding 0.05 to 1.0% by weight of Co has been open to the public (refer to Patent Document 1). According to studies of e.g., the present inventors, however, although thermal fatigue characteristics of above-mentioned solder alloys are improved, dross (wet oxide mass which nuclei is an intermetallic compound and the like) is likely to be formed during soldering, and soldering defects including needle-like protrusion occur due to the presence of an intermetallic compound in a fused solder, as well as, as a result, oxides to be removed to outside a reservoir are found to increase.

Patent Document 1: Japanese Patent Application Laid-Open No. 2003-001482

Furthermore, there has been open to the public an invention by the present applicants in which there are contained 0.1 to 3.0% by weight of Cu and not less than 0.01 and less than 0.05% by weight of Co, and there is added at least one of three kinds of elements of 0.05 to 1.0% by weight of Ag, 0.01 to 0.05% by weight of Ni and 0.005 to 0.05% by weight of Ge (refer to Patent Document 2). This invention is the one in which the added amount of Co is suppressed at such a degree that no dross is formed and higher creep characteristics are obtained due to the addition of Ag, and thus attempts to satisfy all of the properties required for practical use are made. According to studies of the present inventors, however, although wettability, creep characteristics and erosion resistance of Cu of Patent Document 2 are improved, sufficient creep characteristics are not obtained compared with SnAgCu solder alloy; and e.g., in the case in which the content of Cu or Co is increased or minute quantities of impurities are mixed in, it has turned out that intermetallic compounds are excessively precipitated and dross which nuclei is these intermetallic compounds is formed, whereby soldering defects including needle-like protrusion occur, as well as the amount of oxides to be removed to outside a reservoir is increased.

Patent Document 2: Japanese Patent Application Laid-Open No. 2004-330259

Accordingly, from the viewpoint that conventional SnCu solder alloys do not satisfy all of the properties required for practical use, it is still insufficient.

### Disclosure of the Invention

### Problems to be Solved by the Invention

The present invention has an object of providing an SnCu lead-free solder alloy in which while keeping advantages of the invention described in the above-mentioned Patent Document 2 of achieving improvements in wettability, creep strength and erosion resistance of copper, which are problematically low in an Sn-based lead-free solder, eliminated is a drawback, being a problem that an intermetallic compound is excessively precipitated and the precipitate serves as nuclei to form dross to thereby cause soldering defects including needle-like protrusion, to satisfy all of the properties required for practical use.

### Means for Solving the Problems

To achieve the above-mentioned object, as a result of intense study, the present inventors have found that a solder containing 0.1 to 1.5% by weight of Cu, not less than 0.01 and less than 0.05% by weight of Co, 0.05 to 0.5% by weight of Ag, and 0.01 to 0.1% by weight of Sb, and optionally further containing 0.001 to 0.008% by weight of Ge prevents an intermetallic compound from being excessively precipitated, and can clear a hurdle of all of the properties required for practical use of the above-mentioned SnCu solder alloy, and have reached the present invention.

That is, the present invention is a lead-free solder alloy containing 0.1 to 1.5% by weight of Cu, not less than 0.01 and less than 0.05% by weight of Co, 0.05 to 0.5% by weight of Ag and 0.01 to 0.1% by weight of Sb, and optionally further containing 0.001 to 0.008% by weight of Ge, the remainder being Sn.

As mentioned above, in an Sn-based lead-free solder alloy, due to that not less than 0.01 and less than 0.05% by weight of Co is added, an intermetallic compound layer of Sn-Cu, Sn-Co, and Sn-Cu-Co is formed at the interface between a solder and Cu of, for example, a substrate circuit and thus the dissolution of Cu into the solder is suppressed; as well as intermetallic compounds of high strength are produced to be dispersed in minute particles in the solidified solder, whereby the creep strength of the solder is improved. In addition, due to that Co is contained, a surface tension of the solder is decreased and thus the wettabiliy of the solder is improved.

However, when the content of Co is increased, intermetallic compounds of Sn-Cu, Sn-Co, and Sn-Cu-Co are excessively precipitated in a fused solder, and dross is formed. When the content of Co is decreased to such a degree that dross is unlikely to be formed, creep strength comes to be insufficient.

Due to that Ag is contained, creep strength is improved, and wettability is improved as well.

However, in the above-mentioned solder, when the content of Cu or Co in the solder is increased, or minute quantities of impurities are mixed therein, intermetallic compounds of Sn-Cu, Sn-Co, and Sn-Cu-Co are excessively precipitated in the fused solder.

The present invention is to solve such problems by further addition of Sb. That is, according to studies of the present inventors, arises the very remarkable fact that minute quantities of Sb not only achieves improvement in creep characterisitics having conventionally been said to be the effect of addition of Sb, but also suppresses an excessive precipitation in the fused solder of intermetallic compounds of Sn-Cu, Sn-Co, and Sn-Cu-Co, thus to reduce the formation of dross which nuclei is these intermetallic compounds. Consequently, an SnCu solder alloy in which dross is unlikely to be formed, as well as which satisfies all of the properties required for practical use of superior erosion resistance of Cu, wettability, or creep characteristics, to have innovative and novel properties has been obtained in success.

Furthermore, due to that minute quantities of Ge are contained in addition to Sb, not only the formation of dross but also the production of oxides is suppressed, thus enabling to improve wettability.

As described above, due to that Sb, or Sb and Ge are added to a predetermined composition of SnCuAgCo alloy, it is possible to obtain a solder alloy which eliminates the drawback of an SnCuAgCo alloy that intermetallic compounds are excessively precipitated and the precipitate serves as nuclei to form dross, and which can clear a hurdle of all the properties required for practical use of an SnCu solder alloy. Such SnCu solder alloy is the one that cannot be obtained although it has conventionally been much required, so that this SnCu-based solder alloy provides extremely innovative and novel effects. Incidentally, due to that the formation of dross is prevented, not only the occurrence of soldering defects including needle-like protrusion is prevented, but also a drawback that oxides are hard to collect will be eliminated.

Further, although by further addition of Ge, both the formation of dross and the production of oxides are suppressed, when the production amount of oxides is decreased, the added amount of new solder can be reduced, thus resulting in a considerably great advantage of cost.

### Brief Description of the Drawings

FIG. 1 is a composition image using X-ray microanalyzer in the vicinity of the interface between a Cu land and a solder of a creep test piece that has been immersed for 6 seconds at 260 °C in a lead-free solder alloy according to the present invention.
FIG. 2 is a distribution image of Co in the vicinity of the interface between a Cu land and a solder of a creep test piece that has been immersed for 6 seconds at 260 °C in a lead-free solder alloy according to the present invention.
FIG. 3 is a composition image using X-ray microanalyzer in the vicinity of the interface between a Cu land and a solder of a creep test piece that has been immersed for 6 seconds at 260 °C in Sn3Ag0.5Cu.

### Best Modes for Carrying Out the Invention

Now, an example according to the present invention will be described.

In the present invention, the range of contained Cu is in the range of 0.1 to 1. 5% by weight, and when the content of Cu is less than 0.1% by weight, erosion resistance of Cu and wettability come to be lower; and when the content of Cu exceeds 1.5% by weight, a melting point rises, resulting in the occurrence of soldering defects including needle-like protrusion in soldering operation.

Owing to that not less than 0.01 and less than 0.05% by weight of Co is contained, erosion of copper can be suppressed as is a conventional Sn-Pb solder. Intermetallic compound layers of Sn-Cu, Sn-Co, and Sn-Cu-Co to be formed at the soldering interface due to that Co is contained are formed to be comparatively thick in parallel to the soldered face, thus to suppress the elution of copper.

When the content of Co is less than 0.01% by weight, a barrier layer is thin, resulting in less effects of suppressing the dissolution of Cu; and when the content of Co is not less than 0.05% by weight, dross to be produced by precipitation of an intermetallic compound is likely to be formed in the solder, resulting in the occurrence of soldering defects including needle-like protrusion.

The addition of Ag provides no effects of erosion resistance of copper, but improves wettability and creep characteristics. These effects are not exhibited when the content of Ag is less than 0.05% by weight; and when the content of Ag is more than 0.5% by weight, dross is likely to be formed in the solder, resulting in the occurrence of soldering defects including needle-like protrusion.

By the addition of Sb, not only creep characteristics and erosion resistance are improved, but also suppressed is the production of dross to be formed owing to that intermetallic compounds of Sn-Cu, Sn-Co, and Sn-Cu-Co are excessively precipitated in the fused solder, thus enabling stable soldering as well as preventing the occurrence of material defects owing to that intermetallic compounds having been excessively produced in the fused solder are mixed in the solidified solder. These effects are not exhibited when the content of Sb is less than 0.01% by weight; and they are saturated when the content of Sb is 0.1% by weight, so that in the case of an object to suppress the excessive growth of intermetallic compounds, further addition thereof is unnecessary. In particular, addition of not less than 0.03% by weight of Sb provides greater effects of the present invention.

By the addition of Ge together with Sb, not only wettability and creep characteristics are improved, but also oxides are considerably decreased. These effects are not exhibited when the content of Ge is less than 0.001% by weight; and dross is likely to be formed, and erosion resistance of copper is decreased when the content thereof exceeds 0.008% by weight. The added amount of Ge with which this dross is likely to be formed is affected by the addition of minute quantities of Sb; and in the case of no addition of Sb, since dross may be formed even by the addition of not more than 0.008% by weight of Ge, to provide effects of the addition of Ge, the addition of Sb is necessary. As is Ge, although as a component of decreasing the amount of oxides of a solder, other P and Ga are known, since the addition of P or Ga prevents the production of intermetallic compound layers of Sn-Cu, Sn-Co, and Sn-Cu-Co at the interface between the solder and e.g., Cu land, and impairs erosion resistance of copper, the object of the present invention is not achieved.

Now, the present invention will be described further using examples.

### Examples

Solders of 4kg of examples (No. 1 to No. 2) and comparative examples (No. 1 to No. 4) to have compositions of the below-mentioned table 1 were prepared. Incidentally, Sn0.7Cu0.04Co (example 1) means a solder alloy of 0.7% by weight of Cu and 0.04% by weight of Co, the remainder being Sn.

With the solder having been obtained, a solid phase temperature/a liquid phase temperature (°C), creep strength (150 °C, 3 kgf), zero-crossing time (sec), elution amount of Cu (260 °C, 30 minutes) and the presence or absence of dross formation were measured. Results are shown in the below-mentioned table 1. Incidentally, measurement methods are as follows.

### [Solid phase temperature/liquid phase temperature (°C)]

A solder of 500 g was used, and a melting point [solid phase temperature/liquid phase temperature (°C)] was measured by a cooling method.

### [Creep strength]

A tin plated copper wire of φ 0.8 mm was inserted in a glass epoxy substrate of 30 mm × 30 mm × 1.6 mm having a copper circuit of φ 3.0 mm and a through hole of φ 1.1 mm at a center, and the face to be soldered was previously heated at about 100 °C and thereafter immersed for 6 seconds in a solder reservoir having been heated at 260 °C to make soldering, to have a creep test piece. This test piece having been soldered was set on a rack and put in a temperature-controlled bath at 150 °C; and a load of 3 kgf was imposed when the test piece has reached a predetermined temperature, and a time period until the soldered portion is ruptured was measured.

### [Zero-crossing time (sec)]

Using a copper plate of 5 × 50 × 0.3 mm, a zero-crossing time (seconds) was measured with the use of wettability-testing machine on the conditions of immersion depth of 2 mm, immersion speed of 2.5 mm/seconds and immersion time period of 10 seconds. Incidentally, the test was conducted at the temperature of 255 °C, and a flux of RMA type was used.

### [Erosion amount of copper (g/30 minutes)]

A solder of 2.5 kg was put in a porcelain dish, and heated and fused to be at 255 °C. A copper plate of 20 mm width and 1 mm thickness was attached to an end of a propeller agitation of φ 60 mm, and the end of 20 mm was immersed in the above-mentioned solder. Subsequently, agitation was made for 30 minutes using the propeller agitation at 30 rpm. In this case, the speed of movement of the copper plate in the solder is about 1 m/minute. The weight of the copper plate before and after the test was measured, and the amount of Cu having been dissolved into the solder was measured.

### [Production amount of oxides (g/30 minutes, presence or absence of dross formation)]

A solder of 2.5 kg was put in a porcelain dish, and heated and fused to be at 255 °C. In the surface of this solder, a propeller agitation (3 pieces of vanes) of φ 60 mm was immersed, agitation was made at the surface for 30 minutes at 60 rpm, and oxides having been produced were weighed to let this weight the production amount of oxides. Furthermore, in the oxides having been collected using a spatula, it was observed with the naked eye whether or not dross is formed. Since the dross sticks to the spatula in a sticky way, discrimination between a dried oxide and dross can be easily made with the naked eye.

**[Table 1]**

| test solder | material composition | solid phase temperature /liquid phase temperature (°C) | zero-crossing time(sec.) | creep strength (hours) | erosion amount of copper (g/30 min.) | production amount of oxides (g/30 min.)/presence or absence of dross formation |
|---|---|---|---|---|---|---|
| Example 1 | Sn0.7Cu0.3Ag0 .04Co0.04Sb | 218/227 | 0.81 | 51.0 | 0.18 | 105/ absent |
| Example 2 | Sn0.8Cu0.2Ag0 .04Co0.03Sb0. 004Ge | 218/227 | 0.72 | 65.1 | 0.21 | 70/absent |
| | | | | | | |
| Comparative Example 1 | Sn0.7Cu | 227/227 | 1.04 | 9.6 | 0.62 | 120/ absent |
| Comparative Example 2 | Sn0.7Cu0.03Co | 227/227 | 0.82 | 31.1 | 0.17 | 135/ present |
| Comparative Example 3 | Sn0.7Cu0.3Ag0 .04Co | 218/227 | 0.78 | 35.0 | 0.20 | 140/ present |
| Comparative Example 4 | Sn0.7Cu0.3Ag0 .04Co0.005Ge | 218/227 | 0.76 | 42.0 | 0.22 | 70/ present |

As obvious from the above-mentioned results, while the zero-crossing time of a solder alloy of examples 1 to 2 is 0.72 to 0.81 seconds, it is 0.76 to 1.04 seconds in comparative examples 1 to 4. In addition, while the creep strength of the examples 1 to 2 is 51.0 to 65.1 hours, it is 9.6 to 42.0 hours in the comparative examples 1 to 4. Further, while the erosion amount of copper in the examples 1 to 2 is 0.18 to 0.21 g/30 minutes, it is 0.17 to 0.62 g/30 minutes in the comparative examples 1 to 4. Moreover, while the production amount of oxides in the examples 1 to 2 is 70 to 105 g/30 minutes, it is 70 to 140 g/30 minutes in the comparative examples 1 to 4; and while in the solder containing Co in the comparative examples 2 to 4, there is formed dross, there is no formation of dross in the examples 1 to 2.

In the comparative example 4, being the solder in which Ge is added with containing no Sb, by effects of Ge, although there are small amounts of production of oxides, there is formed dross. From this fact and comparison with the example 2, it is obvious to suppress the production of both the production of oxides and the formation of dross by containing Ge together with Sb. Whereby, these results show that by adding minute quantities of Sb to SnCuAgCo alloy, high erosion resistance of copper and wettability are kept, and creep strength and the function of suppressing the formation of dross are improved.

Furthermore, these results also show that by adding both Sb and minute quantities of Ge in combination, there is formed no dross, and the production amount of oxides is reduced.

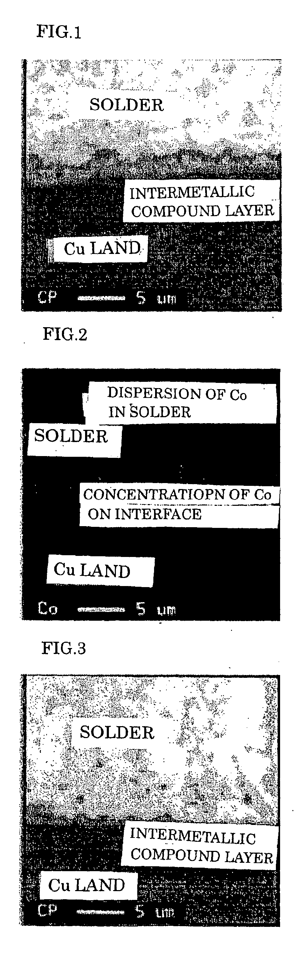

FIG. 1 is a composition image using X-ray microanalyzer in the vicinity of an interface between a solder and a Cu land of a sample of a glass epoxy substrate of 30 mm × 30 mm × 1.6 mm having a copper circuit of φ 3.0 mm and a through hole of φ 1.1 mm at a center inserted with a tin plated copper wire of φ 0.8 mm being immersed for 6 seconds in the solder of the example 1 having been heated at 260 °C. FIG. 2 is a distribution image of Co using X-ray microanalyzer in the same field of view as that of FIG. 1. FIG. 3 is the same composition image as FIG. 1 of Sn3Ag0.5Cu with no Co.

An intermetallic compound layer of FIGS. 1 and 3, by analysis of X-ray microanalyzer, is the intermetallic compound layer of Sn-Cu, Sn-Co or Sn-Cu-Co. FIGS. 1 and 3 show that by adding Co, the intermetallic compound layer comes to be thick to form a barrier layer of suppressing the dissolution of Cu in the solder.

Further, FIG. 2 shows that Co is present at a high concentration at the interface, to suppress the dissolution of Cu, as well as Co is dispersed in the solder to enforce a solder structure and thus to improve mechanical characteristics such as creep strength.

## Claims

1. A lead-free solder alloy containing 0.1 to 1.5% by weight of Cu, not less than 0.01 and less than 0.05% by weight of Co, 0.05 to 0.5% by weight of Ag and 0.01 to 0.1% by weight of Sb, the remainder being Sn.

2. The lead-free solder alloy according to claim 1, wherein the content of the Sb is 0.03 to 0.1% by weight.

3. The lead-free solder alloy according to claim 1 or 2, wherein 0.001 to 0.008% by weight of Ge is further contained.
